# EUROPÄISCHE PATENTANMELDUNG

(11) **EP 3 572 178 A1**
(43) Veröffentlichungstag der Anmeldung: **27.11.2019**
(21) Anmeldenummer: 18173891.5
(22) Anmeldetag: 23.05.2018
(51) Int. Cl.: B23K 26/067, B23K 26/044, B23K 26/03

(54) **VERFAHREN ZUM VERSCHWEISSEN VON BAUTEILEN UND EINE ANWENDUNG DES VERFAHRENS**

(71) Anmelder: ANDRITZ Soutec AG, CH-8413 Neftenbach (CH)
(72) Erfinder: KRONTHALER, Michael, 8184 Bachenbülach (CH); MEYER, Hanspeter, 8536 Hüttwilen (CH); CLERC, Jean-Frédéric, 8180 Bülach (CH); STÄUBLI, Daniel, 5430 Wettingen (CH)
(74) Vertreter: Tschinder, Thomas

(57) **Zusammenfassung**

Die Erfindung betrifft ein Verfahren zum stumpfen Verschweissen von Blechen, insbesondere im Karosseriebau der Motorfahrzeugindustrie, bei welchem mindestens zwei flache Bauteile (29,30,31) mit beliebigen Konturen einem Bearbeitungsprozess zugeführt werden. In einem ersten Teilprozess werden die Bauteile (29,30,31) zueinander und unter Bildung eines minimalen Spaltes (39) positioniert und mit Haltemitteln (6) fixiert. In einem weiteren Teilprozess werden die Spaltposition und Spaltbreite (D) des Spaltes (39) kontinuierlich unmittelbar vor dem Verschweissen gemessen und die Messwerte zur Steuerung eines Laserschweisskopfes (14) verwendet. Erfindungsgemäss ist der Laserschweisskopf (14) mit einer drehbaren Twin-Spot-Optik ausgestattet, wobei die relative Ausrichtung eines Hauptspots (8) und eines Nebenspots (9) zueinander während des Schweissprozesses in Abhängigkeit von der absoluten Lage des Spaltes (39) und der Spaltbreite (D) gesteuert wird, indem die Bearbeitungsoptik (7) des Laserschweisskopfes (14) unter dem Drehwinkel Alpha (23) um die Laserstrahlachse gedreht wird.

## Beschreibung

Die vorliegende Erfindung betrifft ein Verfahren zum stumpfen Verschweissen von Bauteilen, insbesondere von Tailored Welded Blank Bauteilen im Karosseriebau der Automobilindustrie.
Dabei werden mindestens zwei flache Bauteile in einem ersten Teilprozess zueinander positioniert und fixiert, und zwar so, dass sich zwischen den beiden zu verschweissenden Schweisskanten ein minimaler Spalt bildet. In einem weiteren Teilprozess wird die Spaltposition und Spaltbreite des Spaltes kontinuierlich unmittelbar vor dem Verschweissen gemessen. Diese Messwerte werden dann zur Steuerung einer Laserschweisseinrichtung verwendet, wobei an Hand der Messwerte zumindest die Schweissdrahtzufuhr und die Bearbeitungsoptik gesteuert werden.

Tailored Blanks (TB) oder auch Tailored Welded Blanks (TWB) wurden entwickelt, um Blechplatinen herzustellen, welche breiter waren, als es seinerzeit mit der vorhandenen Walztechnik möglich war. Heutzutage wird vor allem der Vorteil genutzt, dass Platinen aus verschiedenen Werkstoffgüten oder Blechdicken zusammengesetzt werden können und dies auch noch mit weniger Verschnitt. Dies ermöglicht, verschiedene Stellen des späteren Bauteils an lokale künftige Belastungen anzupassen, was anderenfalls zusätzliche Verstärkungsteile erfordern würde. Vorteile sind die Einsparung von Gewicht und Fertigungskosten. TWBs werden vielfach in der Automobilindustrie für die Herstellung von Fahrzeugkarosserien eingesetzt, wobei aus einzelnen Blechtafeln - allenfalls nach Blechkantenvorbereitung - geschweisste Teile hergestellt werden. Bei bekannten Schweissverfahren, insbesondere beim Laserschweissen, gibt es zwei bekannte Methoden: Bei einer ersten Methode werden Blechtafeln exakt positioniert, eingespannt und von einem beweglichen Schweisskopf verschweisst. Beim anderen Verfahren werden Blechtafeln aus zueinander parallelen Bahnen kommend einem ortsfesten Schweisswerkzeug zugeführt und verschweisst. Beide Methoden erfordern einen hohen Aufwand an die mechanische Präzision, um eine Spaltbreite von aktuell ca. maximal 0.3 mm zu verarbeiten.

In der Patentschrift US5328083 ist ein Verfahren und eine Vorrichtung zur Durchführung des Verfahrens beschrieben, wobei aber nicht offenbart wird, wie die genaue Positionierung des Schweisswerkzeuges im Vergleich zum aktuellen Nahtverlauf erfolgt. Dabei können Ungenauigkeiten der Platinen und Positionsverschiebungen des Nahtverlaufes zu fehlerhaften Schweissnähten führen.

Die Europäische Patenschrift EP 0450349 betrifft ein Verfahren zum kontinuierlichen Verschweissen von auf Stoss geführten Bändern oder Blechen ohne Zuführung von Zusatzwerkstoffen mittels eines Laserstrahls, wobei das Schweissgut im Bereich der Schweissnaht in Bandlaufrichtung unmittelbar hinter dem Schweissfokus gekühlt wird - in Abhängigkeit der Breite des von den Stosskanten gebildeten Spaltes. In dieser Publikation wird auch eine Vorrichtung zum kontinuierlichen Verschweissen von auf Stoss geführten Blechen oder Bändern mittels eines ortsfesten Laserstrahls vorgeschlagen, mit an beiden Seiten der zu verschweissenden Bänder paarweise senkrecht zu deren Laufrichtung angeordneten Spannrollen, die im Bereich des Stosses der Bänder einen minimalen Spalt bilden, auf den der ortsfeste Laserstrahl beim Verschweissen der Stosskanten trifft.

In der Europäischen Patentschrift EP 0817698 B1 wird ein Verfahren zum kontinuierlichen Stumpfnahtschweissen von Blechtafeln beschrieben, bei welchem die relative Lage der Blechtafeln und damit die Genauigkeit der Nahtfuge innerhalb eines vorgegebenen Toleranzbereiches eingehalten wird. Dabei wird bewusst auf eine mechanisch präzise Ausrichtung der miteinander zu verschweissenden Bleche verzichtet, stattdessen wird das Strahlwerkzeug mittels Sensorik zum fortlaufenden Ermitteln der Spaltbreite und Spaltposition dem Blechstoss der beiden Blechtafeln nachgeführt. Im Weiteren kann mit einem Regelkreis die Leistung des Schweissstrahls und die erforderliche Kühlleistung für den Schweissprozess (Gas, Wasser) permanent angepasst werden. Ein solches System bedarf eines hohen Wartungsaufwandes.

In der industriellen Fertigungstechnik gewinnt der Laser aufgrund der Vielzahl an technologischen Vorteilen zunehmend an Bedeutung. Diese Vorteile ergeben sich vor allem durch die gezielte, zeitlich und örtlich begrenzte Energieeinbringung in das Werkstück und der damit verbundenen hohen Bearbeitungsgeschwindigkeit. Im Bereich des Karosserieleichtbaus eröffnet sich dem Laserstrahlschweissen ein grosses fertigungstechnisches Potential.

Herausfordernd beim Laserschweissen sind Situationen, wo sich die Spaltsituation von Bauteil zu Bauteil unterscheiden kann, wobei verschiedene Spaltsituationen wie beispielsweise A-, V-, Parallel-, Null-Spalt oder Mischformen davon auftreten. Hohe Spaltmasse führen zu einem Verlust an absorbierter Laserenergie durch den Spalt. Mittels Defokussieren des Monofokus ist es zwar möglich, diesen Verlust in einem gewissen Mass zu reduzieren. Dabei reduziert sich aber zwangsweise auch die maximale Intensität des Laserstrahls. Wobei bei einem technischen Null-Spalt die Fähigkeit des Durchschweissens, also das vollständige Durchdringen des Bauteils mittels der Metalldampfkapillare beim Laserstrahlschweissen, ebenfalls reduziert wird. Das kann entweder durch eine verringerte Schweissgeschwindigkeit oder aber durch eine erhöhte Laserleistung in gewissem Masse ausgeglichen werden. Zusammenfassend kann gesagt werden, dass in der Anwendung ein Spannungsfeld zwischen Spaltüberbrückbarkeit und Durchschweissfähigkeit entsteht. Um eine optimale Produktivität zu gewährleisten, werden die LaserstrahlQuellen am Auslegungslimit der Laserleistung betrieben. Eine Änderung der Schweissgeschwindigkeit während der Schweissaufgabe ist in vielen Anlagenkonzepten aufgrund der Reaktionszeit nicht möglich. Dies führt im Allgemeinen zu einer verringerten Produktivität.

In der Automobilindustrie werden heutzutage Door-Rings aus Tailored Welded Blanks (TWB) hergestellt. Solche Door-Rings bestehen typischerweise aus bis zu acht Einzelteilen, aber auch eine höhere Anzahl ist vorstellbar. Dabei kann die Blechdicke der Einzelteile unterschiedlich sein. Auf Grund von Form- und Fertigungstoleranzen bei den Einzelteilen ergibt sich normalerweise zumindest an einer Schweissnaht am Fertigteil durch das Schiessen des Ringes eine ungünstige Spaltbildung. Im Weiteren ist für eine effiziente Produktion die Tatsache erschwerend, dass sich die Spaltsituation von Door-Ring zu Door-Ring unterscheiden kann, wobei verschiedene Arten von Spaltsituationen auftreten können. Das Beherrschen von V-Spalten stellt dabei die grösste Herausforderung dar.
Eine schlechte Schweissqualität hat zur Folge, dass bei Door-Ring Crash-Tests unerwünschte Nahtrisse entstehen können. Dieses Risiko kann in der Herstellung von Door-Rings aus Sicherheitsüberlegungen nicht eingegangen werden. Bekannt sind derzeit Verfahren, um variable Spalte bis zu maximal 0.3 mm mittels Zugabe von Fülldraht zu schliessen.

Um das Problem der Verarbeitbarkeit von breiten Schweissspalten zu lösen, wurden bis jetzt einige Ansätze verfolgt. So verfolgt beispielsweise die Idee eines Scan-Trackers mit Monofokus den Ansatz, dass ein Laserstrahl mit kleinem Fokusdurchmesser (0.2 mm bis 0.3 mm) und hoher Intensität quer zur Schweissaufgabe pendelt. Abhängig von der Spaltbreite wird die Amplitude sowie die Laserleistung variiert. Versuche mit der am Markt verfügbaren Systemtechnik zum Schweissen von Platinen zeigen allerdings, dass bei hohen Schweissgeschwindigkeiten von etwa 10 m/min die Periodenlänge der Pendelbewegung aufgrund der erreichbaren Frequenzen keine vollständige Überdeckung des umgeschmolzenen Materials gewährleistet. Um akzeptable Schweissnähte zu generieren, müsste die Schweissgeschwindigkeit deutlich reduziert werden, was unabhängig von Spalt oder Nullspalt zu einem Verlust an Produktivität führen würde.

Die Idee des Trifokal-Lasers mit mindestens drei Monofokusse verfolgt den Ansatz, mittels Strahlformung eine spaltbreitenabhängige Anpassung der Intensitätsverteilung durch drei fasergekoppelte Laserstrahlquellen vorzunehmen und damit grössere Spalte ohne Produktivitätsverlust aufzufüllen. Dabei werden vorgängig zwei Spots mit kleinem Durchmesser und ein nachlaufender Spot mit grossem Durchmesser verwendet. Die geometrische Anordnung der Spots kann nicht verändert werden und passt nur auf einen Anwendungsbereich. Die Änderung erfolgt über die Leistung der einzelnen Strahlquellen. Allerdings kann in der praktischen Anwendung die Intensität der kleinen Spots nicht ausreichend reduziert werden, um im Schweissgut keine störenden Randkerben zu generieren. Aufgrund der geometrischen Konstanz erlaubt dieses Konzept im Produktionsprozess nur einen sehr geringen Spielraum für das Anpassen anhand der variablen Spaltbreite.

In der Patentschrift DE 101 13 471 B4 ist ein Laser-Hybridschweissverfahren offenbart, bei dem ein konventionelles Schweissverfahren mit einem Laser kombiniert wird. Dabei werden zwei Laserfokussierungspunkte erzeugt. Erfindungsgemäss werden dort die Abstände der beiden Fokussierungspunkte auf Grundlage der Messung von einzelnen Parametern des Schweissprozesses, insbesondere der Schweissgeschwindigkeit und Schweissgüte, laufend variiert.

Beim Schweissen von Tailored Blanks ist es mit der aktuell verfügbaren Technik möglich, variable Gaps bis maximal 0.3 mm mit Zusatzmaterial zu schweissen. Eine Herausforderung ist es variable Spalte bis etwa 1 mm dynamisch mit Zusatzmaterial (Draht) und in hoher Schweissqualität zu schliessen.

Wichtige Kriterien in einem Verfahren zum Schweissen von Tailored Blanks sind einerseits der Durchsatz der gesamten Anlage, das heisst wie viele Teile pro Stunde unter Berücksichtigung einer akzeptablen Ausschussrate hergestellt werden können, und anderseits der Aufwand, um sowohl die Qualität des gesamten Verarbeitungsprozesses als auch die gewünschte Qualität der geschweissten Platinen sicherstellen zu können.

Nachteilig bei den vorab erwähnten Lösungen und Verfahren sind der hohe technische Aufwand für das Kühlen der Schweissnaht, für das prozesssichere Spannen der Bleche, für das Abführen von Schweissrauch und Schweissspritzer aus der Anlage, sowie die Kapazität und somit die Produktivität der Gesamtanlage. Im Allgemeinen ist bei solchen Anlagen entweder die Schweissoptik als fahrbar ausgelegt und die zu verschweissenden Platinen ruhen, oder aber das Schweissgut wird kontinuierlich zugeführt und die Schweissoptik ist während dem Schweissprozess ortsfest. Nachteilig ist im Weiteren der nicht unerhebliche Aufwand für das Beladen und das Entladen der Transportbänder.

Der vorliegenden Erfindung liegt daher die Aufgabe zu Grunde, ein Verfahren anzugeben, bei dem die vorstehend genannten Nachteile eliminiert werden.

Diese Aufgabe wird durch die in Anspruch 1 angegebenen Merkmale gelöst.

Erfindungsgemäss ist die Laserschweisseinrichtung als Laser mit drehbarer Twin-Spot-Optik ausgestaltet, bestehend aus einem Haupt- und einem Nebenspot. Die relative Ausrichtung des Hauptspots und des Nebenspots zueinander wird während des Schweissprozesses in Abhängigkeit von der absoluten Lage des Spaltes und der Spaltbreite gesteuert, indem die Bearbeitungsoptik der Laserschweisseinrichtung unter dem Drehwinkel Alpha um die Laserstrahlachse gedreht wird.

Durch diesen Aufbau kann durch ein einfaches Verdrehen der Bearbeitungsoptik die Position der Laserspots in Bezug auf den Schweissspalt verändert werden und unterschiedlichen Spaltbreiten angepasst werden.
Es wurde festgestellt, dass sich je nach Kantenform (gerundet, scharfkantig, mit Grat) ein zusätzlicher Offset (Y-Offset) der Laserspots in eine Richtung senkrecht zur Transportrichtung der Bauteile positiv auf das Schweissergebnis auswirken kann. Das bedeutet, dass herausgefunden wurde, dass der Mittelpunkt zwischen Hauptspot und Nebenspot nicht immer auf der Spaltmitte liegt muss, um ein optimales Schweißergebnis zu erzielen. Es sind auch Fälle denkbar, bei denen dieser Mittelpunkt einen gewissen Offset zur Spaltmitte aufweist. Es ist somit vorteilhaft, wenn die Bearbeitungsoptik auch in eine Richtung senkrecht zur Transportrichtung der Bauteile bewegt wird, sodass dadurch ein Offset des Mittelpunktes zwischen den beiden Spots in Bezug auf die Spaltmitte eingestellt wird.
Vorzugsweise bleibt der Abstand der beiden Spots voneinander konstant.

Der Nebenspot kann beispielsweise in Schweissrichtung betrachtet hinten um den Hauptspot gedreht werden.

Es ist aber auch denkbar, dass die Drehachse, um die die beiden Laserspots als Einheit gedreht werden, zwischen Hauptspot und Nebenspot bzw. auf dem nachlaufenden Nebenspot liegt.

Es ist günstig, wenn die Bearbeitungsoptik relativ zu den zu verschweissenden Bauteilen bewegbar ist, vorzugsweise in eine Richtung senkrecht zur Transportrichtung der Bauteile (in der Bauteilebene liegend). Die relative Geschwindigkeit zwischen den zu verbindenden Bauteilen und der Bearbeitungsoptik entspricht dabei der Schweissgeschwindigkeit (v_{MatFluss}).

Die Schweissgeschwindigkeit (v_{MatFluss}) kann während des Schweissprozesses konstant sein, sie kann aber auch in Abhängigkeit von der Spaltbreite, der Blechdicke oder der Blechkantenqualität gesteuert werden.
Das gleiche gilt für die Laserleistung während des Schweissprozesses.

Dieses erfindungsgemässe Verfahren ermöglicht die effiziente und prozesssichere industrielle Herstellung von Tailored Welded Blank (TWB) Teilen, insbesondere von Door-Rings für die Automobilindustrie. Dabei werden die Platinen mittels magnetischen Kräften von unten auf einem Förderband fixiert, sodass die Zugänglichkeit zur Maschine von oben gewährleistet ist. Die Erfindung erlaubt das prozesssichere Verbinden von Bauteilen in einer TWB-Anordnung ohne Produktivitätseinbussen und resultiert in einer Vergrösserung des Prozessfensters bzgl. Spaltbreite und der Kantenqualität des Eingangsmaterials gegenüber dem Stand der Technik. Insbesondere erlaubt die vorgeschlagene Lösung auch das Beherrschen der grossen Herausforderungen beim prozesssicheren Schliessen von V-Spalt Situationen. Durch Vergrösserung des Prozessfensters reduziert sich die Gesamtausschussrate, womit die Produktivität insgesamt deutlich gesteigert werden kann. Zudem kann die Schweissqualität verbessert werden.

Da die Platinen über eine längere Transportstrecke prozesssicher fixiert werden, kann auch eine fahrbare oder "fliegende" Optik eingesetzt werden wie in der Europäischen Patentschrift EP 3038789 A1 beschrieben, wodurch die Kapazität der Maschine im Vergleich zu anderen Maschinen mit herkömmlichen Konzepten um bis zu 20% erhöht werden kann. Im Weiteren wirkt sich das magnetische Halteprinzip positiv auf das Einhalten eines möglichst kleinen Spaltes zwischen den zu verschweissenden Platinen aus, womit eine bessere Qualität der Schweissnaht erreicht werden kann.

Die vorliegende Erfindung wird im Folgenden anhand von Ausführungsbeispielen unter Bezugnahme auf Zeichnungen weiter erläutert. Dabei zeigen:
- Fig.1: eine schematische Darstellung einer erfindungsgemässen Anlage im Querschnitt,
- Fig.2: eine schematische Darstellung eines Laserschweisskopfes,
- Fig.3: eine schematische Darstellung von Bauteilen mit Spaltproblematik in einer Anwendung,
- Fig.4: eine schematische Darstellung möglicher Formen von Gaps zwischen zwei Bauteilen im Querschnitt,
- Fig.5: eine erste Draufsicht auf das mit zwei Bauteilen bestückte Transportband der erfindungsgemässen Anlage, in schematischer Darstellung,
- Fig.6: eine zweite Draufsicht auf das mit zwei Bauteilen bestückte Transportband der erfindungsgemässen Anlage, wiederum in schematischer Darstellung,
- Fig.7: eine erste Schnittdarstellung A - A der beiden Bauteile gemäss Fig.5, wobei die Darstellung der Twin-Spots aus der xy-Ebene in die yz-Ebene geschwenkt wurde,
- Fig.8: eine zweite Schnittdarstellung A' - A' der beiden Bauteile gemäss Fig.6 wobei die Darstellung der Twin-Spots aus der xy-Ebene in die yz-Ebene geschwenkt wurde, und
- Fig.9: eine dritte Schnittdarstellung A' - A' der beiden Bauteile gemäss Fig.6, wobei die Darstellung der Twin-Spots aus der xy-Ebene in die yz-Ebene geschwenkt wurde.

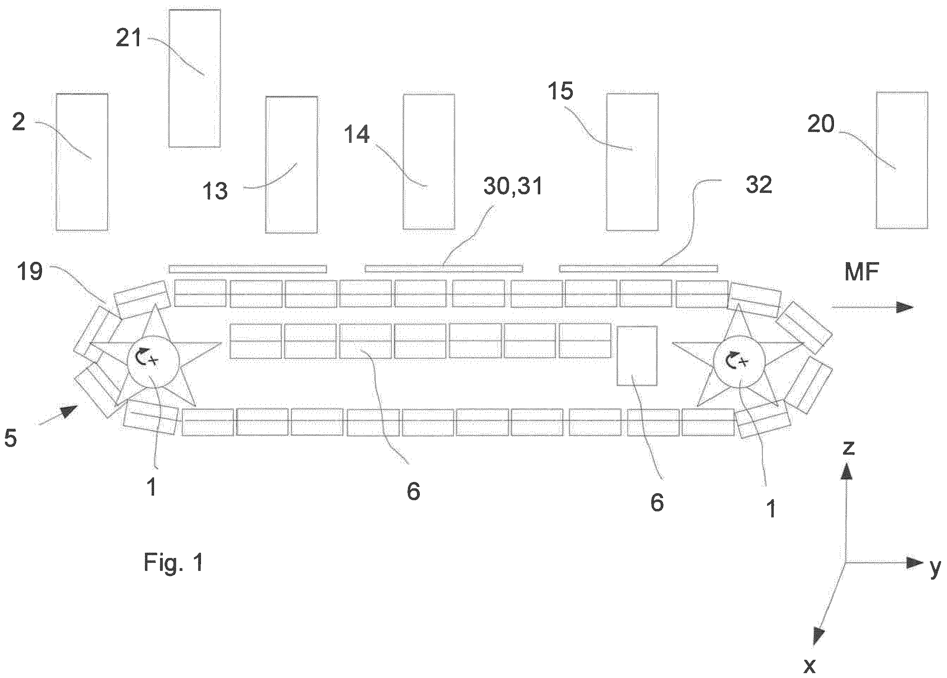

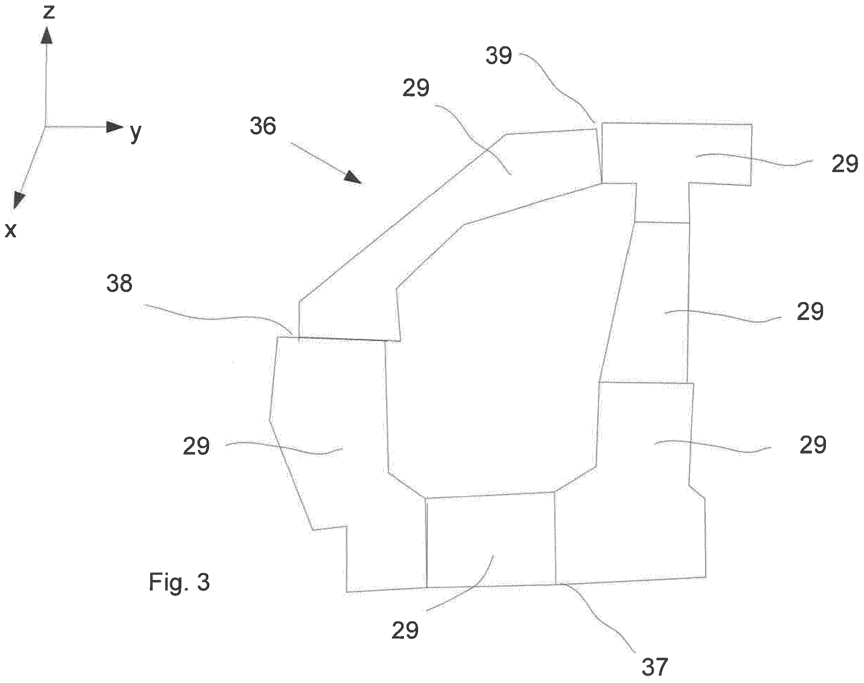

Fig.1 zeigt als Querschnitt-Darstellung einen Magnetkettenförderer 5 mit dem über die Antriebsritzel 1 in Materialflussrichtung MF bewegbaren endlosen Transportband 19, das mittels Zuführmitteln 2 mit magnetisierbaren Bauteilen 30,31 bestückt wird. Diese werden durch magnetische Haltemittel 6 auf dem Transportband 19 mit hoher Kraft festgehalten. Das Kantenfindungssystem 13 erlaubt die exakte Bestimmung der zwischen den Bauteilen 30,31 vorhandenen Zwischenräume (Spalte) und der Kantengeometrie der Bauteile 30,31. Die Bauteile 30,31 werden durch einen senkrecht zur Querschnitt-Darstellung in x- und y-Richtung bewegbaren Schweisskopf 14 gemäss Fig.3 miteinander verschweisst und mittels Transportband 19 in Materialflussrichtung MF bewegt. Die geschweissten Bauteile 32 werden mittels einem Qualitätssicherungssystem 15 inspiziert und mit Mitteln zur Weiterverarbeitung 20 beaufschlagt. Dem Schweissen kann ein Entschichtungsvorgang zum Vorbereiten der Bauteile vorausgeschalten sein, wobei dieser in einem vorgelagerten Prozessschritt oder auch vorgängig in einer separaten Entschichtungsanlage 21 (Ablationsanlage) erfolgen kann.

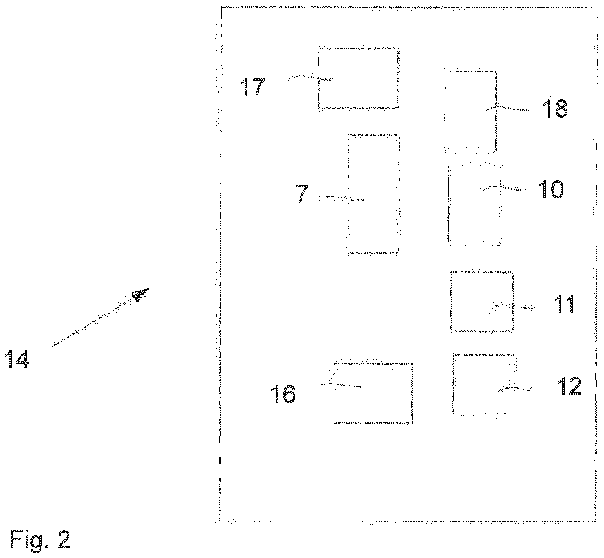

Fig.2 zeigt in schematischer Darstellung einen Laserschweisskopf 14 mit der Bearbeitungsoptik 7, welche als Laser mit Doppelfokus ausgestaltet und mit einem Optik-Drehantrieb 17 versehen ist, für die Verdrehung um eine Achse parallel oder in einem spitzen Winkel zur z-Achse. Der Fokus wird mittels Fokus-Achsantrieb 10 senkrecht zur Schweissebene in z-Richtung bewegt. Die Korrektur der Laserachse erfolgt mittels dem Korrektur-Laserachse-Antrieb 18. Die für den Schweissprozess benötigte Zusatzdrahtmenge wird mittels des Zusatzdraht-Antriebs 12 über die Zusatzdraht-Zuführung 11 mit der Zusatzdrahtgeschwindigkeit zugeführt. Des Weiteren kann für eine Verbesserung der Schweissqualität die Prozesszone zusätzlich noch mit einem geeigneten Prozessgas begast werden. Abschliessend entfernt das Absaugsystem 16 die beim Schweissprozess entstehenden Verunreinigungen und Schweisspartikel.

Fig.3 zeigt in einer schematischen Darstellung die Spaltproblematik bei der Anordnung von Einzelbauteilen 29 eines Door-Ring 36. Die Einzelbauteile 29 weisen produktionsbedingt einen minimalen Winkelfehler auf. Infolge solcher kleinen Winkelfehler entstehen überall im Door-Ring 36 weitere Fehler wie beispielsweise ein Kantenversatz 38, ein Winkelfehler 37 im Schliessspalt oder ein Spalt 39 zwischen zwei Einzelbauteilen 29.

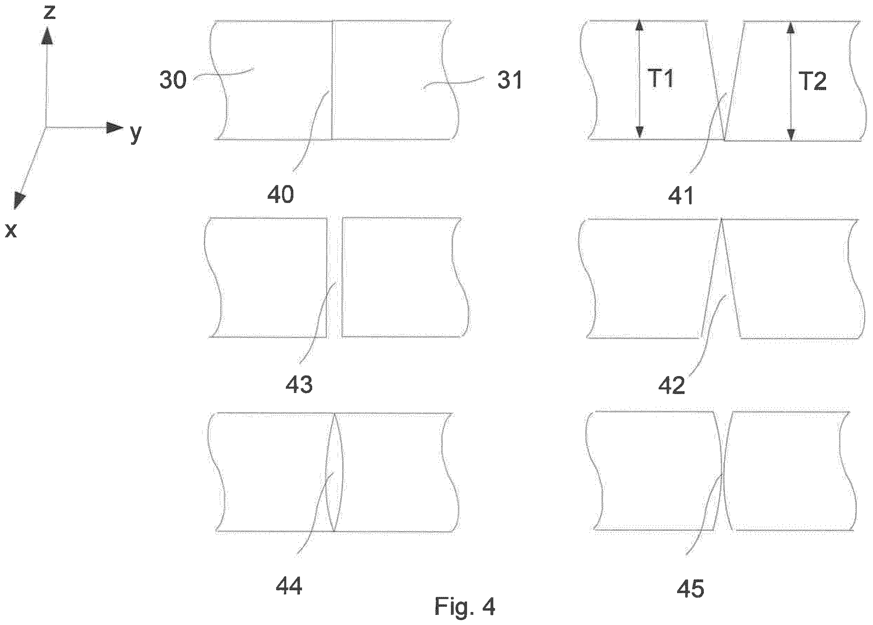

Fig.4 zeigt in einer schematischen Darstellung mögliche Formen von Spalten (GAPs) 39 zwischen zwei Bauteilen 30,31 mit den Blechdicken T1 und T2, insbesondere zero-GAP 40, opening-GAP 41, closing-GAP 42, parallel-GAP 43, belly-GAP 44 und waist-GAP 45. Andere Formen von GAPs und Mischformen sind ebenfalls möglich.

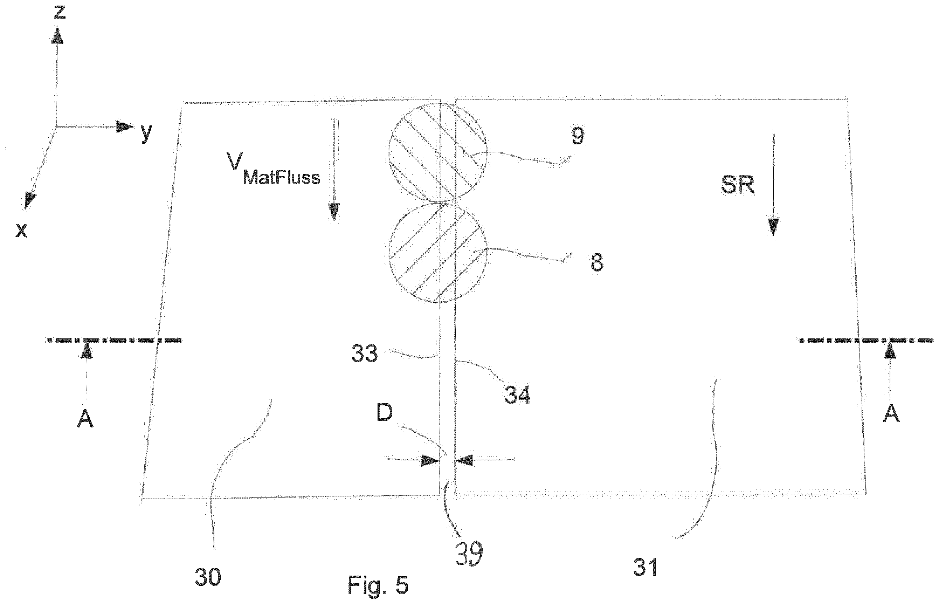

Fig.5 zeigt in schematischer Darstellung eine Draufsicht auf das in der Schweissebene xy mit zwei Bauteilen 30,31 bestückte Transportband der erfindungsgemässen Anlage. Mittels Schweissprozess wird der Spalt 39 mit der Spaltbreite D zwischen den Schweisskanten 33,34 geschlossen. Dabei wird mit einem Twin-Spot-Optik-Laser mit dem Hauptspot 8 in Schweissrichtung SR vorne und mit dem Nebenspot 9 in Schweissrichtung SR hinten mit der Schweissgeschwindigkeit v_{MatFluss} gearbeitet, wobei die Ausrichtung der beiden Spots 8,9 gemäss der aktuellen Schweisssituation in Abhängigkeit der Spaltgeometrie geregelt wird. Man erkennt dabei, dass der Mittelpunkt (von den Spotzentren aus betrachtet) zwischen dem Hauptspot 8 und dem Nebenspot 9 nicht auf der Spaltmittellinie liegt, sondern in y-Richtung einen Offset aufweist. Dieser seitliche Versatz macht Sinn (y-Offset), wenn beispielsweise die beiden Schweißkanten unterschiedlich ausgebildet sind.

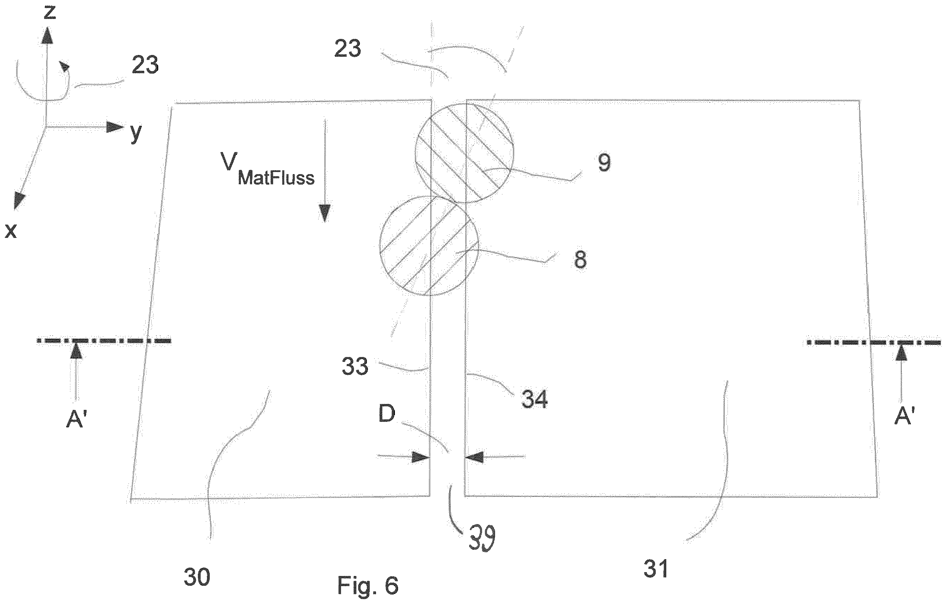

Fig.6 zeigt wiederum in schematischer Darstellung eine Draufsicht auf das in der Schweissebene xy mit zwei Bauteilen 30,31 bestückte Transportband der erfinderischen Anlage, wobei die Ausrichtung der beiden Twin-Spots - dem Hauptspot 8 und dem Nebenspot 9 - um den Drehwinkel Alpha 23 um die z-Achse, senkrecht zur Schweissebene xy in Abhängigkeit von der Spaltbreite D gedreht ist.

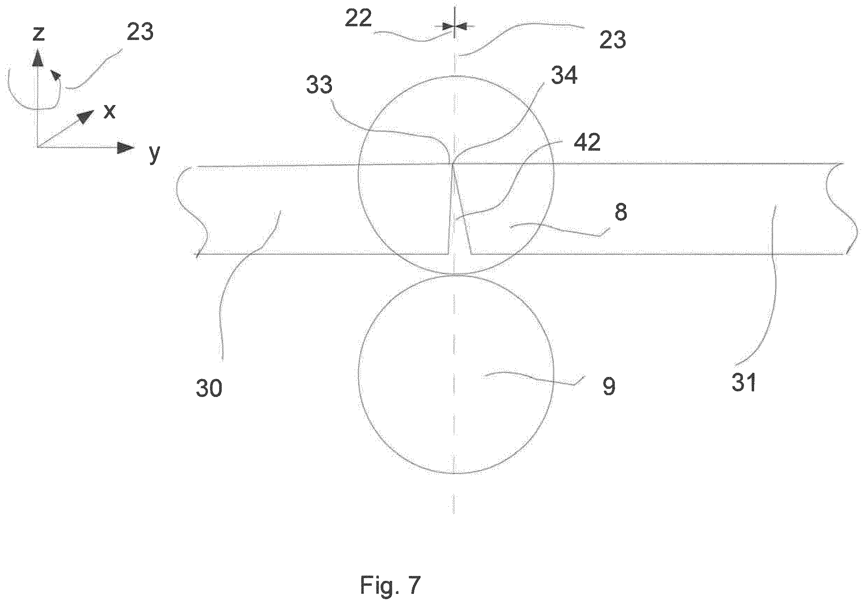

Fig.7 zeigt in einer ersten Schnittdarstellung A - A gemäss Fig.5 die beiden Bauteile 30,31 mit dem in der Schweissebene xy bewegbaren Twin-Spots - dem Hauptspot 8 und dem Nebenspot 9 -, wobei die Darstellung der Twin-Spots 8,9 aus der xy-Ebene in die yz-Ebene geschwenkt wurde. Beispielhaft wird zwischen den Bauteilen 30,31 ein closing-GAP 42 gezeigt, wobei sich die beiden Schweisskanten 33,34 am oberen Ende der Bauteile 30,31 berühren. Der Drehwinkel Alpha 23 ist Null Grad und der Y-Offset 22 beträgt 0.0 mm.

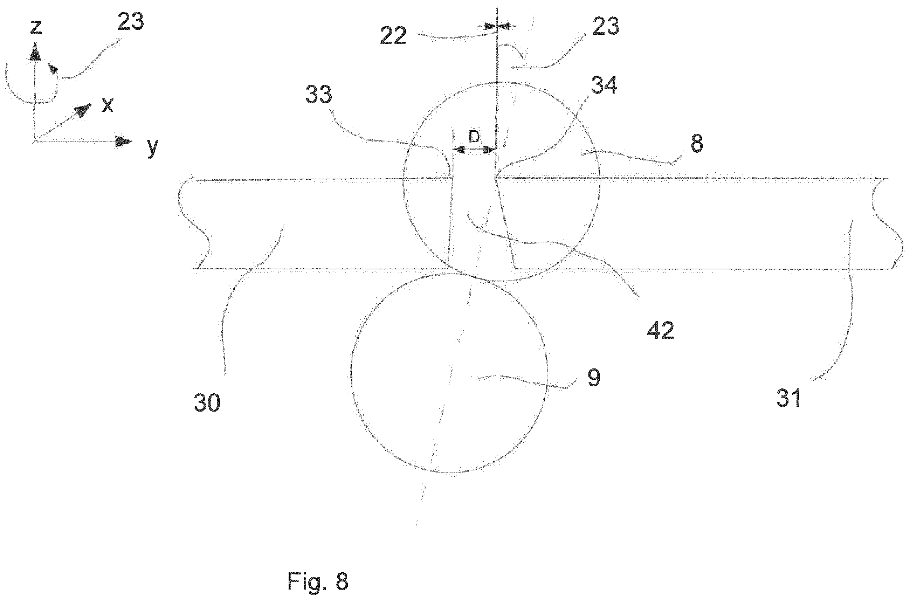

Fig.8 zeigt in einer zweiten Schnittdarstellung A' - A' gemäss Fig.6 die zwei Bauteile 30,31 mit den in der Schweissebene xy bewegbaren Twin-Spots - dem Hauptspot 8 und dem Nebenspot 9 -, wobei die Darstellung der Twin-Spots 8, 9 aus der xy-Ebene in die yz-Ebene geschwenkt wurde. Beispielhaft wird zwischen den Bauteilen 30,31 ein closing-GAP 42 gezeigt, zwischen den beiden Schweisskanten 33,34 am oberen Ende der Bauteile 30,31 beträgt der Abstand D. Der Drehwinkel Alpha 23 ist etwa 20 Grad und der Y-Offset 22 beträgt wiederum 0.0 mm.

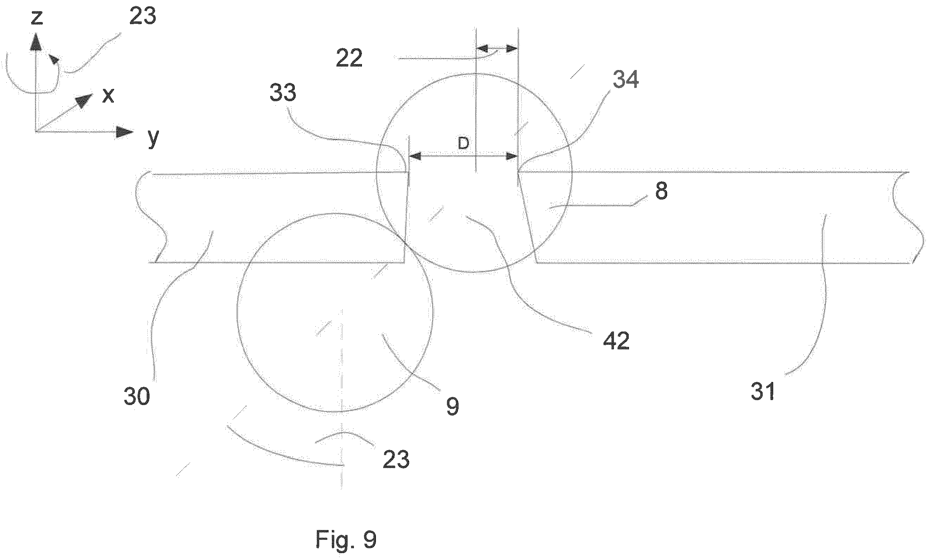

Fig.9 zeigt in einer dritten Schnittdarstellung A' - A' gemäss Fig.6 die zwei Bauteile 30,31 mit den in der Schweissebene x,y bewegbaren Twin-Spots - dem Hauptspot 8 und dem Nebenspot 9 -, wobei die Darstellung der Twin-Spots 8, 9 aus der xy-Ebene in die yz-Ebene geschwenkt wurde. Beispielhaft wird zwischen den Bauteilen 30,31 ein closing-GAP 42 gezeigt, zwischen den beiden Schweisskanten 33,34 am oberen Ende der Bauteile 30,31 beträgt der Abstand D. Der Drehwinkel Alpha 23 ist etwa 40 Grad und der Y-Offset 22 beträgt etwa 0.1 mm.

### Bezugszeichenliste

- 1: Antriebsritzel
- 2: Zuführmittel
- 5: Magnetkettenförderer
- 6: Haltemittel
- 7: Bearbeitungsoptik
- 8: Hauptspot
- 9: Nebenspot
- 10: Fokus-Achsantrieb
- 11: Zusatzdraht-Zuführung
- 12: Zusatzdraht-Antrieb
- 13: Kantenfindungssystem
- 14: Laserschweisskopf
- 15: Qualitätssicherungssystem
- 16: Absaugsystem
- 17: Optik-Drehantrieb
- 18: Korrektur-Laserachse-Antrieb
- 19: Transportband
- 20: Mittel zur Weiterverarbeitung
- 21: Entschichtungsanlage
- 22: Y-Offset
- 23: Drehwinkel Alpha
- 29: Einzelbauteil
- 30: Bauteil A
- 31: Bauteil B
- 32: geschweisstes Bauteil
- 33,34: Schweisskanten
- 36: Door-Ring
- 37: Winkelfehler
- 38: Kantenversatz
- 39: Spalt
- 40: zero-GAP
- 41: opening-GAP
- 42: closing-GAP
- 43: parallel-GAP
- 44: belly-GAP
- 45: waist-GAP

- D: Spaltbreite
- T1, T2: Blechdicke
- MF: Materialflussrichtung
- xy: Schweissebene
- x, SR: Schweissrichtung
- y: senkrecht zur Schweissrichtung
- z: senkrecht zur Schweissebene xy
- V_{MatFluss}: Schweissgeschwindigkeit in Materialflussrichtung

## Patentansprüche

1. Verfahren zum stumpfen Verschweissen von Blechen, insbesondere im Karosseriebau der Motorfahrzeugindustrie, bei welchem mindestens zwei flache Bauteile (29,30,31) mit beliebigen Konturen einem Bearbeitungsprozess zugeführt werden, wobei in einem ersten Teilprozess die Bauteile (29, 30,31) zueinander und unter Bildung eines minimalen Spaltes (39) zwischen den mindestens zwei miteinander zu verschweissenden Schweisskanten (33,34) positioniert und mit Haltemitteln (6) fixiert werden, wobei in einem weiteren Teilprozess die Spaltposition und Spaltbreite (D) des Spaltes (39) kontinuierlich unmittelbar vor dem Verschweissen gemessen wird und dass diese Messwerte zur Steuerung eines Laserschweisskopfes (14) verwendet werden, wobei damit zumindest die Schweissdrahtzufuhr (11) und die Bearbeitungsoptik (7) gesteuert werden, **dadurch gekennzeichnet, dass** der Laserschweisskopf (14) mit einer drehbaren Twin-Spot-Optik ausgestattet ist und die relative Ausrichtung eines Hauptspots (8) und eines Nebenspots (9) zueinander während des Schweissprozesses in Abhängigkeit von der absoluten Lage des Spaltes (39) und der Spaltbreite (D) gesteuert wird, indem die Bearbeitungsoptik (7) des Laserschweisskopfes (14) unter dem Drehwinkel Alpha (23) um die Laserstrahlachse gedreht wird.

2. Verfahren nach Anspruch 1, **dadurch gekennzeichnet, dass** der Nebenspot (9) in Schweissrichtung (SR) hinten um den Hauptspot (8) gedreht wird.

3. Verfahren nach Anspruch 1, **dadurch gekennzeichnet, dass** die Drehachse, um die die beiden Laserspots (8,9) als Einheit gedreht werden, zwischen Hauptspot (8) und Nebenspot (9) liegt.

4. Verfahren nach Anspruch 1, **dadurch gekennzeichnet, dass** die Drehachse, um die die beiden Laserspots (8,9) als Einheit gedreht werden, auf dem nachlaufenden Nebenspot (9) liegt.

5. Verfahren nach einem der Ansprüche 1 und 4, **dadurch gekennzeichnet, dass** die Bearbeitungsoptik (7) relativ zu den Bauteilen (29,30,31) bewegbar ist, wobei die relative Geschwindigkeit zwischen den zu verbindenden Bauteilen (29, 30,31) und der Bearbeitungsoptik (7) der Schweissgeschwindigkeit (v_{MatFluss}) entspricht.

6. Verfahren nach einem der Ansprüchen 1 und 5, **dadurch gekennzeichnet, dass** die Schweissgeschwindigkeit (v_{MatFluss}) während des Schweissprozesses konstant ist.

7. Verfahren nach den Ansprüchen 1 und 5, **dadurch gekennzeichnet, dass** die Schweissgeschwindigkeit (v_{MatFluss}) während des Schweissprozesses variabel ist und in Abhängigkeit von der Spaltbreite (D) gesteuert wird.

8. Verfahren nach Anspruch 7, **dadurch gekennzeichnet, dass** die Schweissgeschwindigkeit (v_{MatFluss}) in Abhängigkeit von der Blechdicke (T1, T2) gesteuert wird.

9. Verfahren nach Anspruch 7 oder 8, **dadurch gekennzeichnet, dass** die Schweissgeschwindigkeit (v_{MatFluss}) in Abhängigkeit von der Blechkantenqualität gesteuert wird.

10. Verfahren nach einem der Ansprüche 1 bis 9, **dadurch gekennzeichnet, dass** die Laserleistung während des Schweissprozesses konstant ist.

11. Verfahren nach einem der Ansprüche 1 bis 9, **dadurch gekennzeichnet, dass** die Laserleistung während des Schweissprozesses variabel ist und in Abhängigkeit von der Spaltbreite (D) oder von der Blechdicke (T1, T2) oder von der Blechkantenqualität gesteuert wird.

12. Verfahren nach einem der Ansprüche 1 bis 11, **dadurch gekennzeichnet, dass** die Bearbeitungsoptik (7) in der Bauteilebene betrachtet in eine Richtung senkrecht zu einer Transportrichtung der Bauteile (29, 30, 31) bewegt wird.

13. Verfahren nach Anspruch 12, **dadurch gekennzeichnet, dass** die Bearbeitungsoptik in Abhängigkeit von der Schweißkantenform so ausgerichtet wird, dass der Mittelpunkt zwischen den beiden Spots (8, 9) nicht auf der Spaltmittellinie liegt.

14. Verfahren nach einem der Ansprüche 1 bis 13, **dadurch gekennzeichnet, dass** die Bearbeitungsoptik (7) in eine Richtung parallel zur Transportrichtung der Bauteile (29, 30, 31) bewegt wird.

15. Anwendung des Verfahrens nach einem der Ansprüche 1 bis 14 im Karosseriebau der Automobilindustrie zur Herstellung von Door-Rings (36) aus Tailored Blank Bauteilen (29, 30, 31) .
